# FASCICULE DE BREVET EUROPEEN

(11) **EP 4 037 308 B1**
(45) Date de publication et mention de la délivrance du brevet: **31.07.2024**
(21) Numéro de dépôt: 22151208.0
(22) Date de dépôt: 12.01.2022
(51) Int. Cl.: H04N 25/76, H04N 25/702

(54) **CAPTEURS D'IMAGES**
BILDERFASSUNGSSENSOREN
IMAGE SENSORS

(30) Priorité: 29.01.2021 FR 2100897
(43) Date de publication de la demande: 03.08.2022
(73) Titulaire: STMICROELECTRONICS (GRENOBLE 2) SAS, 38000 Grenoble (FR)
(72) Inventeur: CHOSSAT, Jérôme, 38500 VOIRON (FR); THIVIN, Mathieu, 38340 Voreppe (FR)
(74) Mandataire: Cabinet Beaumont

(56) Documents cités:
- WO-A1-2020/121699
- US-A1- 2011 242 375
- US-A1- 2020 204 794
- US-A1- 2022 046 198

## Description

### Domaine technique

La présente description concerne de façon générale les capteurs d'images, en particulier les capteurs d'images CMOS.

### Technique antérieure

D'une manière classique, un capteur d'images comprend des pixels disposés en matrice, selon des rangées et des colonnes. Pour chaque rangée, les pixels de la rangée sont reliés à plusieurs pistes conductrices de rangée permettant de sélectionner et contrôler tous les pixels de la rangée. Pour chaque colonne, les pixels de la colonne sont reliés à une piste conductrice de la colonne permettant de collecter un signal représentatif de l'intensité lumineuse captée par le pixel de la colonne qui est sélectionné. Les pistes de colonne du capteur sont connectées à un étage de sortie du capteur, réalisant notamment des fonctions d'échantillonnage, d'amplification, de conversion analogique-numérique, et de mémorisation des niveaux de signaux lus sur les pistes de colonne. Généralement, les pixels d'une même rangée sont lus simultanément (en parallèle) par l'étage de sortie du capteur, et les pixels de rangées distinctes sont lus successivement.

Pour certaines applications, à titre d'exemple non limitatif, dans le domaine des capteurs d'images CMOS embarqués dans des véhicules automobile, il peut être souhaitable d'effectuer une vérification d'intégrité des éléments du capteur avant, après, et/ou pendant chaque acquisition d'une image par le capteur. Le document US 2020/204794 décrit un capteur d'images comprenant une matrice de pixels d'image, des rangées de pixels de test et des colonnes de pixels de test.

### Résumé de l'invention

L'invention pallie tout ou partie des inconvénients des capteurs d'images connus.

L'invention prévoit un dispositif électronique, décrit dans la revendication 1.

Selon un mode de réalisation, chaque pixel d'image comprend au moins une photodiode et est configuré pour générer une tension de sortie à sa sortie qui dépend de la lumière atteignant ladite au moins une photodiode, et chaque pixel de test comprend une entrée recevant l'une ou l'autre de deux tensions de référence de sorte que le pixel de test fournisse le signal de sortie à l'une ou l'autre des deux valeurs en l'absence du défaut.

Selon un mode de réalisation, le dispositif électronique comprend un circuit de commande des premières et deuxièmes pistes de sélection, un circuit de traitement analogique et de conversion analogique-numérique couplé aux premières et deuxièmes pistes de sortie, et un support sur lequel sont disposés les premier, deuxième, et troisième réseaux, le circuit de commande et le circuit de traitement analogique et de conversion analogique-numérique, le deuxième réseau étant situé sur le support du côté du premier réseau opposé au circuit de traitement analogique et de conversion analogique-numérique et le troisième réseau étant situé sur le support du côté du premier réseau opposé au circuit de commande.

Selon un mode de réalisation, le nombre donné de signaux de sortie lus successivement correspond à la longueur de la plus petite région d'intérêt de l'image sur laquelle le processeur est configuré pour appliquer un traitement.

Selon un mode de réalisation, le processeur est configuré pour déterminer si l'orientation de l'image acquise est correcte, et/ou à quelle position du premier réseau de pixels d'image correspondent les signaux vidéo lus avec les signaux de sortie de ladite partie même si l'un des signaux de sortie de ladite partie n'est pas à l'une desdites deux valeurs.

Selon un mode de réalisation, le processeur est configuré pour déterminer, pour chaque signal de sortie, si le signal de sortie est à l'une ou l'autre des deux valeurs, et, dans le cas où le signal de sortie n'est pas à l'une ou l'autre des deux valeurs, indiquer que les pixels d'image, couplés à la même piste de sélection et/ou à la même première piste de sortie que le pixel de test ayant fourni le signal de sortie, sont invalides.

Selon un mode de réalisation, les pixels de test de chaque premier groupement sont configurés pour fournir une succession de signaux de sortie alternant entre les première et deuxième valeurs.

Selon un mode de réalisation, les pixels de test du deuxième groupement de chaque groupe sont configurés pour fournir des signaux de sortie codant un identifiant unique dudit groupe.

Selon un mode de réalisation, les pixels de test de chaque deuxième groupement sont répartis en couples de pixels de test configurés pour fournir les mêmes signaux de sortie.

Selon un mode de réalisation, chaque ensemble de pixels de test comprend un deuxième alignement de pixels de test adjacent au premier alignement de pixels de test, les pixels des premier et deuxième alignements étant appariés, et les pixels de test de chaque paire de pixels de test étant configurés pour fournir des signaux de sortie différents parmi les deux valeurs.

Selon un mode de réalisation, le processeur est configuré pour déterminer, pour chaque paire de pixels de test, si les signaux de sortie fournis par les pixels de test de la paire sont différents, et, dans le cas où les signaux de sortie ne sont pas différents, indiquer que les pixels d'image, couplés à la même piste de sélection et/ou à la même première piste de sortie que les pixels de test de la paire, sont invalides.

Selon un mode de réalisation, les pixels d'image du premier réseau sont agencés en rangées et en colonnes, le dispositif étant configuré pour fonctionner dans une première configuration dans laquelle toutes les rangées du premier réseau sont sélectionnées successivement et dans une deuxième configuration dans laquelle seule une partie des rangées du premier réseau sont lues successivement, le nombre de pixels de test de chaque groupe du premier alignement étant inférieur au nombre de rangées de ladite partie.

Selon un mode de réalisation, chaque pixel de test comprend un premier transistor MOS ayant un drain couplé à un noeud d'entrée, une source couplée à un deuxième noeud, et une grille couplée à l'une des pistes de sélection, un deuxième transistor MOS ayant un drain couplé à une tension de référence supérieure, une source couplée au deuxième noeud, et une grille couplée à une piste de signal de réinitialisation, un premier suiveur couplé au deuxième noeud et configuré pour répliquer une tension sur le deuxième noeud vers une sortie du premier suiveur, et un troisième transistor ayant un drain couplé à la sortie du premier suiveur, une source couplée à une sortie de lecture, et une grille couplée à une piste de signal de lecture. Chaque pixel d'image comprend une photodiode, un quatrième transistor MOS ayant un drain couplé à l'anode ou la cathode de la photodiode, une source couplée à un troisième noeud, et une grille couplée à l'une des pistes de sélection, un cinquième transistor MOS ayant un drain couplé à la tension de référence supérieure, une source couplée au troisième noeud, et une grille couplée à une piste de signal de réinitialisation, un deuxième suiveur couplé au troisième noeud et configuré pour répliquer une tension sur le troisième noeud vers une sortie du deuxième suiveur, et un sixième transistor ayant un drain couplé à la sortie du deuxième suiveur, une source couplée à une sortie de lecture, et une grille couplée à une piste de signal de lecture.

L'invention prévoit également un procédé de conception du dispositif électronique tel que défini précédemment, comprenant la détermination de chaque pixel de test fournissant un signal de sortie à l'une des deux valeurs attendues en l'absence d'un défaut et chaque pixel de test fournissant un signal de sortie à l'autre des deux valeurs attendues en l'absence d'un défaut, de façon que les pixels de test du deuxième réseau et/ou du troisième réseau forment au moins un ensemble de pixels de test comprenant un premier alignement de pixels de test, de façon à pouvoir déterminer, à partir de la lecture successive de n'importe quelle partie, comprenant au moins un nombre donné des signaux de sortie du premier alignement lus successivement, si l'orientation de l'image acquise est correcte, et/ou à quelle position du premier réseau de pixels d'image correspondent des signaux vidéo lus avec les signaux de sortie de ladite partie.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'un capteur d'images ;
la figure 2 représente un mode de réalisation plus détaillé d'une partie du capteur d'images de la figure 1 ;
la figure 3 illustre un mode de réalisation de répartition de valeurs des pixels de test du capteur d'images de la figure 2 ;
la figure 4 illustre un mode de réalisation de répartition de valeurs des pixels de test du capteur d'images de la figure 2 ;
la figure 5 illustre, par un schéma par blocs, un mode de réalisation d'un procédé d'acquisition d'une image par le capteur d'images de la figure 1 ;
la figure 6 représente un exemple de réalisation d'un pixel d'image du capteur d'images de la figure 2 ; et
la figure 7 représente un mode de réalisation d'un pixel de test du capteur d'images de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments. Sauf précision contraire, les expressions "environ", "approximativement", "sensiblement", et "de l'ordre de" signifient à 10 % près, de préférence à 5 % près. De plus, on appelle "signal binaire" un signal qui alterne entre un premier état constant, par exemple un état bas, noté "0", et un deuxième état constant, par exemple un état haut, noté "1". Les états haut et bas de signaux binaires différents d'un même circuit électronique peuvent être différents. En pratique, les signaux binaires peuvent correspondre à des tensions ou à des courants qui peuvent ne pas être parfaitement constants à l'état haut ou bas.

Un mode de réalisation d'un capteur d'images va être décrit dans un exemple d'application dans lequel le capteur d'images fait partie d'un système avancé d'aide à la conduite qui peut être incorporé dans une automobile. Toutefois, il est clair que le présent mode de réalisation du capteur d'images peut être mis en oeuvre dès qu'il existe un besoin de mettre en oeuvre un test du bon fonctionnement du capteur d'images.

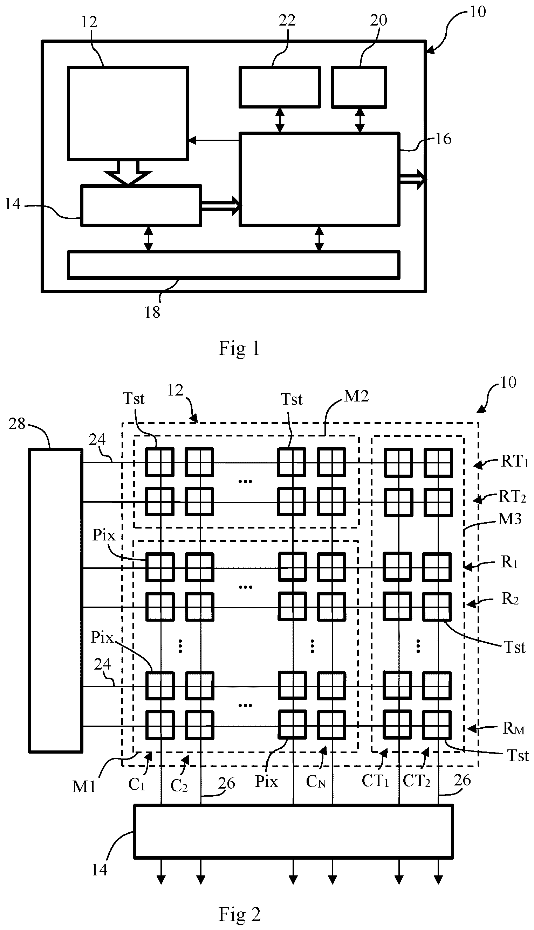

La figure 1 représente, de façon partielle et schématique, un mode de réalisation d'un capteur d'images 10.

Le capteur d'images 10 comprend une matrice 12 de pixels, non représentés en figure 1, dont au moins certains captent des données d'image dans un format analogique et fournissent les données d'image, de manière analogique, à un circuit de traitement analogique et de conversion analogique-numérique 14, qui filtre les données d'image dans le domaine analogique et convertit les données d'image dans le domaine numérique pour produire des données d'image numériques. Le circuit de traitement analogique et de conversion analogique-numérique 14 transmet les données d'image numériques à un processeur 16, qui, conformément aux réglages reçus de registres de commande 18, exécute les fonctions de traitement numérique souhaitées. A titre d'exemple, le processeur 16 peut réaliser des traitements visant à améliorer l'image.

Le processeur 16 fournit des signaux de sortie via une interface de données appropriée, telle qu'une interface de données parallèle ou une interface de données série, soit directement à d'autres composants du véhicule auxquels le capteur 10 est associé, soit à de tels composants via un bus de données. Une boucle à verrouillage de phase 20 fournit un signal d'horloge à utiliser par le processeur 16, et une mémoire 22 fournit un stockage de données non volatil ou volatil pour le processeur 16. A titre d'exemple, lorsque le capteur d'images 10 fait partie d'un système avancé d'aide à la conduite, les images acquises par le capteur d'images peuvent être transmises à un processeur pouvant réaliser des fonctions telles que la détermination d'une collision imminente du véhicule dans lequel se trouve le capteur d'images 10.

La figure 2 représente un mode de réalisation plus détaillé d'une partie du capteur d'images 10 de la figure 1. Comme cela apparaît sur cette figure 2, la matrice 12 de pixels comprend :
- une première matrice M1, ou réseau, de pixels comprenant des pixels d'image Pix disposés selon des rangées Rᵢ et des colonnes Cⱼ, avec M et N des entiers naturels, i entier naturel allant de 1 à M, et j entier naturel allant de 1 à N ;
- une deuxième matrice M2, ou réseau, de pixels comprenant des pixels de test Tst disposés le long d'un premier bord de la première matrice M1 selon des rangées RTₖ et les colonnes Cⱼ, avec R un entier naturel supérieur ou égal à 2, k entier naturel allant de 1 à R, et j entier naturel allant de 1 à N, R étant égal à 2 en figure 2 ;
- une troisième matrice M3, ou réseau, de pixels, comprenant des pixels de test Tst disposés le long d'un deuxième bord de la première matrice M1, attenant au premier bord, et le long d'un bord de la deuxième matrice M2, selon les rangées Rᵢ et RTₖ et des colonnes CTₚ, avec Q un entier supérieur ou égal à 2, i entier allant de 1 à M, et p entier allant de 1 à Q, Q étant égal à 2 en figure 2 ;
- pour chaque rangée Rᵢ et RTₖ, une piste conductrice de rangée 24, également appelée piste de sélection, reliée, pour chaque rangée Rᵢ, à des entrées des pixels d'image Pix de la première matrice M1 de la rangée Rᵢ et à des entrées des pixels de test Tst de la troisième matrice M3 de la rangée Rᵢ, et reliée, pour chaque rangée RTₖ, à des entrées des pixels de test Tst de la deuxième matrice M2 de la rangée RTₖ et à des entrées des pixels de test Tst de la troisième matrice M3 de la rangée RTₖ ; et
- pour chaque colonne Cⱼ et CTₚ, une piste conductrice 26 s'étendant le long de la colonne Cⱼ ou CTₚ, appelée indifféremment piste de colonne ou piste de sortie par la suite, reliée, pour chaque colonne Cⱼ, à des sorties des pixels d'image Pix de la première matrice M1 de la colonne Cⱼ et à des sorties des pixels de test Tst de la deuxième matrice M2 de la colonne Cⱼ, et reliée, pour chaque colonne CTₚ, à des sorties des pixels de test Tst de la troisième matrice M3 de la colonne CTₚ.

Selon un mode de réalisation, M varie entre 1 et quelques dizaines de milliers, et N varie entre 1 et quelques dizaines de milliers. Selon un mode de réalisation, R est pair et Q est pair. Selon un mode de réalisation, R varie entre 2 et quelques dizaines, et Q varie entre 2 et quelques dizaines.

Le capteur d'images 10 comprend, en outre, un circuit de commande de rangées 28 configuré pour commander les pistes de sélection 24, par exemple configuré pour fournir un signal binaire de sélection RD sur chaque piste de sélection 24. Selon un mode de réalisation, le circuit de commande de rangées 28 est connecté aux pistes de sélection 24 de toutes les rangées Rᵢ et RTₖ du côté de la première matrice M1 opposé à la troisième matrice M3 de pixels de test Tst. Le circuit de traitement analogique et de conversion analogique-numérique 14 est connecté aux pistes de colonne 26 de toutes les colonnes Cj et CTₚ du côté de la première matrice M1 opposé à la deuxième matrice M2 de pixels de test Tst.

Chaque pixel d'image Pix comprend un élément photosensible, par exemple une photodiode, configuré pour capter le rayonnement lumineux incident pendant une phase dite d'intégration, et pour fournir un signal électrique analogique représentatif de l'intensité lumineuse captée pendant la phase d'intégration. Le signal de sortie fourni par chaque pixel d'image Pix peut varier entre des première et deuxième valeurs extrêmes, l'une d'entre elles étant représentative de la réception d'une intensité lumineuse minimale, voire nulle, pendant la phase d'intégration, et l'autre étant représentative de la réception d'une intensité lumineuse maximale pendant la phase d'intégration.

Selon un mode de réalisation, les pixels de test Tst ont la même structure électrique, ou sensiblement la même, que les pixels d'image Pix, et partagent les mêmes pistes de sélection 24 et/ou les mêmes pistes de colonne 26 que la première matrice M1, avec une différence. Cette différence est qu'au lieu de l'élément photosensible, chaque pixel de test Tst comprend un noeud fournissant une tension connue ayant l'une de deux valeurs. Puisque les tensions fournies par les pixels de test Tst sont connues, l'exécution d'une opération donnée sur les pixels de test Tst devrait produire un résultat connu. Lorsque le résultat connu n'est pas produit, on peut en déduire qu'une ou plusieurs des pistes de sélection et de sortie 24 et 26 n'ont pas fonctionné correctement ou que les circuits de lecture tels que le circuit de traitement analogique et de conversion analogique-numérique 14 ou le circuit de commande de rangées 28 n'ont pas fonctionné correctement. Ainsi, on peut en déduire que la sortie des pixels d'image Pix de la première matrice M1 ne peut pas être fiable, car la première matrice M1 partage exactement les mêmes pistes de sélection et de sortie 24 et 26 que les pixels de test Tst et utilise le même circuit de traitement analogique et de conversion analogique-numérique 14 et le même circuit de commande de rangées 28. Ainsi, dans le cas où le capteur d'images 10 fait partie d'un système avancé d'assistance au conducteur, le processeur 16 peut prendre une action appropriée sur la base de cette connaissance (par exemple, désactivation d'un mode de conduite automatique, avertissement d'un conducteur que la détection de collision ou les avertissements de sortie de voie sont hors ligne, etc.).

Selon un autre mode de réalisation, les pixels de test Tst peuvent prendre des formes différentes et être électriquement différents des pixels d'image Pix. De façon générale, la structure des pixels de test Tst est telle que chaque pixel de test Tst fournit un signal de sortie attendu lorsque les circuits électroniques de la chaîne de lecture fonctionnent de façon correcte et ne fournit pas le signal de sortie attendu lorsque les circuits électroniques de la chaîne de lecture ne fonctionnent pas de façon correcte.

Chaque pixel de test Tst est configuré pour fournir, lors d'une opération de lecture, un signal de sortie à une première valeur ou à une deuxième valeur. A titre d'exemple, la première valeur peut être le même signal de sortie qu'un pixel d'image Pix ayant reçu une intensité lumineuse minimale pendant une phase d'intégration et la deuxième valeur peut être le même signal de sortie qu'un pixel d'image ayant reçu une intensité lumineuse maximale pendant la phase d'intégration. Lorsque le pixel de test Tst fournit le signal de sortie à la deuxième valeur, le pixel de test Tst est dit à "0", et lorsque le pixel de test Tst fournit le signal de sortie à la première valeur, le pixel de test Tst est dit à "1".

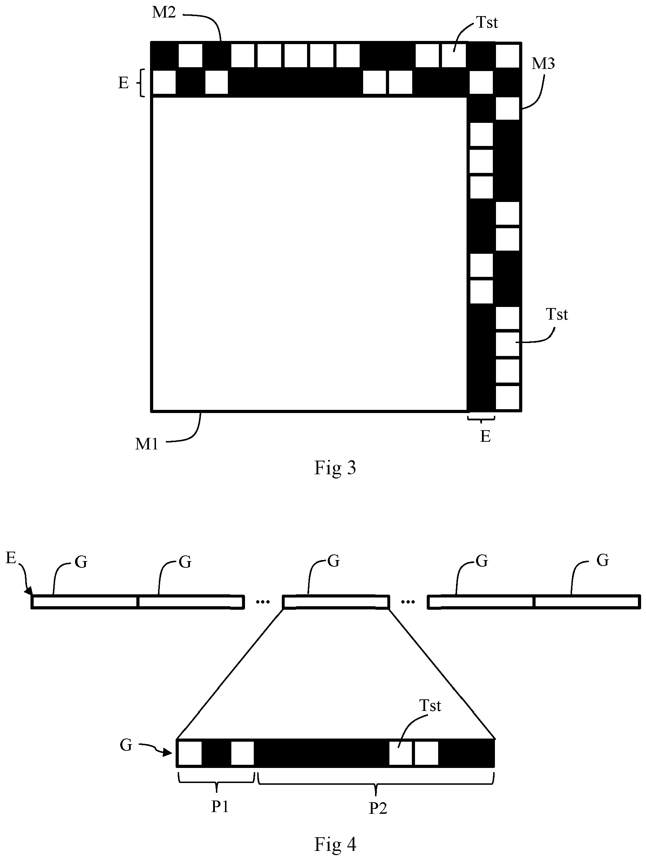

La figure 3 représente, de façon schématique, un exemple de répartition des valeurs des pixels de test Tst. A titre d'exemple, on a représenté en figure 3 par un carré blanc un pixel de test Tst à "1" et par un carré noir un pixel de test Tst à "0".

Selon un mode de réalisation, la répartition des "0" et "1" dans les deuxième et troisième matrices M2 et M3 de pixels de test Tst est déterminée selon un ensemble de règles. Une règle est que, pour la deuxième matrice M2, pour au moins une rangée RTₖ, il y a une autre rangée RT_{k'}, k' étant différent de k, telle que, pour chaque colonne Cⱼ, j variant de 1 à N, les valeurs des pixels de test Tst des rangées RTₖ et RT_{k'} sont opposées. Lorsque la deuxième matrice M2 ne comprend que deux rangées RT₁ et RT₂, ceci signifie que, pour chaque colonne C₁ à C_{N}, les valeurs des pixels de test Tst des rangées RT₁ et RT₂ sont opposées. Une autre règle est que, pour la troisième matrice M3, pour au moins une colonne CTₚ, il y a une autre colonne CT_{p'}, p' étant différent de p, telle que, pour chaque changée Rᵢ, i variant de 1 à M, les valeurs des pixels de test Tst des colonnes CTₚ et CTₚ, sont opposées. Lorsque la troisième matrice M3 ne comprend que deux colonnes CT₁ et CT₂, ceci signifie que, pour chaque rangée R₁ à R_{M}, les valeurs des pixels de test Tst des colonnes CT₁ et CT₂ sont opposées. De plus, on appelle paire de pixels de test, deux pixels de test Tst des rangées RTₖ et RT_{k'} de valeurs opposées de la deuxième matrice M2 et appartenant à la même colonne Cⱼ ou deux pixels de test des colonnes CTₚ et CTₚ, d'un ensemble de pixels de test de la troisième matrice M3 appartenant à la même rangée Rᵢ. Dans la suite de la description, on dit qu'une paire de premier et deuxième pixels de test est à "1" lorsque le premier pixel de test est à "1" et le deuxième pixel de test est à "0" et que la paire de pixels de test est à "0" lorsque le premier pixel de test est à "0" et le deuxième pixel de test est à "1". Selon un mode de réalisation, une paire de pixels de test peut permettre le codage d'un bit. A titre d'exemple, chaque paire de pixels de test à "1" code le bit "1" et chaque paire de pixels de test à "0" code le bit "0", ou inversement.

Dans la suite de la description, on appelle ensemble E de pixels de test l'une des rangées RTₖ et RT_{k'} de la deuxième matrice M2 vérifiant la règle décrite précédemment ou l'une des colonnes CTₚ et CTₚ, de la troisième matrice M3 vérifiant la règle décrite précédemment. Sur la figure 3, à titre d'exemple, les deuxième et troisième matrices M2 et M3 ne comprennent chacune qu'un seul ensemble E de pixels de test.

La figure 4 représente un exemple de répartition des valeurs "0" et "1" des pixels de test Tst d'un ensemble E de pixels de test. Chaque ensemble comprend une succession de groupes G de pixels de test Tst. Chaque groupe G comprend un nombre SIZE_G de pixels de test. Le nombre SIZE_G est de préférence identique pour tous les groupes G de l'ensemble. Le nombre SIZE_G peut dépendre du nombre M de rangées et/ou du nombre N de colonnes. Le nombre SIZE_G peut être le même que l'ensemble appartienne à la deuxième matrice M2 ou à la troisième matrice M3. Selon un mode de réalisation, le nombre SIZE_G varie entre 16 et 128. De façon générale, le nombre SIZE_G est sensiblement égal à la dimension minimale de la partie de l'image, également appelée région d'intérêt, que l'on souhaite pouvoir repérer. Le nombre SIZE_G doit toutefois être assez grand pour permettre le codage d'un identifiant unique pour chaque groupe comme cela est décrit plus en détail par la suite.

Chaque groupe G comprend une succession d'au moins un premier motif P1 et un deuxième motif P2, également appelé premier groupement P1 et deuxième groupement P2.

Le premier motif P1 comprend un nombre SIZE_P1 de pixels de test Tst successifs de valeurs alternées, par exemple successivement un pixel de test à "0", un pixel de test à "1", un pixel de test à "0", etc. Selon un mode de réalisation, le nombre SIZE_P1 est pair. Selon un mode de réalisation, le nombre SIZE_P1 est supérieur ou égal à 4, et est par exemple égal à 4. Le premier motif P1 est appelé code de synchronisation par la suite.

Le deuxième motif P2 comprend un nombre SIZE_P2 de pixels de test Tst successifs et permet de coder un identifiant du groupe G. De façon avantageuse, le deuxième motif P2 ne peut pas être confondu avec le premier motif P1. Dans ce but, le deuxième motif P2 n'est pas recouvrant avec la valeur du premier motif P1 par une quelconque translation ou une inversion. L'identification de chaque groupe G de l'ensemble E est unique. Les deuxièmes motifs P2 de deux groupes G de l'élément E sont donc différents. Selon un mode de réalisation, le deuxième motif P2 permet de coder un compteur dont la valeur augmente du premier groupe au dernier groupe G de l'ensemble E. Le deuxième motif P2 est appelé identifiant de groupe par la suite. Selon un mode de réalisation, le nombre SIZE_P2 est pair. Selon un mode de réalisation, le nombre SIZE_P2 varie de 12 à 124. La somme des nombres SIZE_P1 et SIZE_P2 est égale à SIZE_G.

Selon un mode de réalisation, dans le deuxième motif P2, les valeurs des pixels de test sont dupliquées. Ceci signifie que les pixels de test du deuxième motif P2 sont agencés en couples de pixels de test de mêmes valeurs, de préférence en couples de pixels de test successifs de mêmes valeurs. Selon un mode de réalisation, le nombre SIZE_P2 est pair. Selon un mode de réalisation, le deuxième motif P2 permet le codage de l'identifiant du groupe G avec un nombre SIZE_P2/2 de pixels de test.

Selon un mode de réalisation, lorsque chaque pixel de test code un bit, le deuxième motif P2 peut correspondre à un compteur à (SIZE_P2)/2 bits. A titre d'exemple, pour le 36^{ème} groupe G de l'ensemble E, le nombre 36 étant codé par le code binaire "00100100", dans le cas où SIZE_P2 est égal à 26, le deuxième motif P2 correspond au code binaire "00000000000000110000110000".

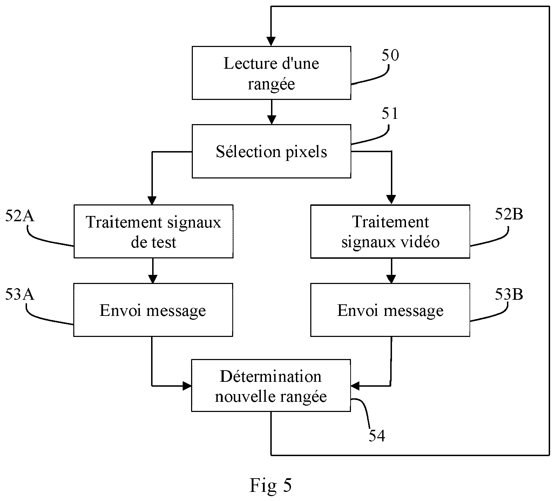

La figure 5 illustre, par un schéma par blocs, un mode de réalisation d'un procédé d'acquisition d'une image par le capteur d'images 10 des figures 1 à 4.

A l'étape 50, une rangée de la matrice 12 est sélectionnée et les signaux de sortie fournis par les pixels de la rangée sélectionnée sont lus par le circuit de traitement analogique et de conversion analogique-numérique 14 et convertis en signaux numériques transmis au processeur 16. On appelle signal de test le signal numérique issu de la conversion analogique-numérique du signal de sortie fourni par un pixel de test Tst et on appelle signal vidéo le signal numérique issu de la conversion analogique-numérique du signal de sortie fourni par un pixel d'image Pix. Le procédé se poursuit à l'étape 51.

A l'étape 51, le processeur 16 sélectionne les signaux de test et les signaux vidéo parmi les signaux numériques reçus à l'étape 50. Lorsqu'une rangée de la deuxième matrice M2 de pixels de test Tst est sélectionnée, tous les signaux numériques reçus par le processeur 16 sont des signaux de test, tandis que, pour les autres rangées de la matrice 12, les signaux numériques reçus par le processeur 16 comprennent des signaux de test et des signaux vidéo. Le procédé se poursuit à l'étape 52A pour le traitement des signaux de test par le processeur 16 et à l'étape 52B pour le traitement des signaux vidéo par le processeur 16. Les étapes 52A et 52B peuvent être réalisées de façon séquentielle ou en parallèle par le processeur 16. Selon un mode de réalisation, le processeur 16 peut déterminer si la rangée de pixels sélectionnée est une rangée de la deuxième matrice M2 de pixels de test Tst à partir du rang de la rangée sélectionnée.

A l'étape 52A, le processeur 16 effectue un traitement sur les signaux de test reçus pour les paires de pixels de test Tst associées à un ensemble de la deuxième matrice M2 de pixels de test Tst obtenu après la lecture des signaux de sortie pour deux rangées de la matrice 12 ou pour une paire de pixels de test de la troisième matrice M3 de pixels de test Tst obtenue après la lecture des signaux de sortie pour une rangée de la matrice 12. De façon générale, le traitement peut être effectué après l'acquisition complète de l'image ou au fur et à mesure de l'acquisition des rangées successives de l'image. Le traitement peut comprendre l'attribution de la valeur "0" ou "1" au signal de test. A titre d'exemple, le signal de test est mis à "1" s'il est supérieur à un premier seuil et est mis à "0" s'il est inférieur à un deuxième seuil. Les premier et deuxième seuils peuvent être stockés dans une mémoire ou peuvent être générés par le processeur 16. Si le signal de test est compris entre les premier et deuxième seuils, le processeur détermine qu'il se produit une erreur. Comme chaque pixel de test est utilisé pour fournir un signal de sortie à l'une ou l'autre de deux valeurs, le procédé d'attribution des valeurs "0" et "1" est peu sensible au bruit présent sur la chaîne de lecture. Une erreur peut correspondre à un problème sur le pixel de test lui-même ou sur la chaîne de lecture fournissant le signal de test. Les valeurs des pixels de test de chaque paire de pixels de test doivent être opposées. Si le processeur 16 attribue la même valeur "0" ou "1" aux deux pixels de test de la même paire de test, cela signifie qu'une erreur s'est produite.

Le traitement peut ensuite comprendre le décodage des signaux de test. Selon un mode de réalisation, lorsque chaque paire de pixels de test permet le codage d'un bit, l'opération de décodage peut comprendre la détermination des bits codés par les paires de pixels de test. De façon avantageuse, pour le premier motif P1 de chaque groupe G, si une erreur est obtenue lors de l'attribution des valeurs "0" ou "1" aux signaux de test d'une paire de pixels de test, la détermination du bit codé par cette paire de pixels de test reste possible à partir des signaux de test des autres paires de pixels de test du premier motif P1. De façon avantageuse, pour le deuxième motif P2 de chaque groupe G, si une erreur est obtenue lors de l'attribution des valeurs "0" ou "1" aux signaux de test, la détermination du bit codé par cette paire de pixels de test reste possible puisque des couples de paires de test de même valeurs sont présents. Ceci permet d'obtenir un procédé de décodage qui soit robuste.

A partir du premier motif P1 de chaque groupe G, le processeur peut déterminer si l'image acquise est orientée convenablement, ou si une inversion entre le haut et le bas et/ou entre la droite et la gauche s'est produit. A titre d'exemple, s'il est attendu le code binaire "1010" pour un premier motif P1 de la deuxième matrice M2 et que le processeur 16 détermine le code binaire "0101", cela signifie que l'image présente une inversion entre la droite et la gauche. A titre d'exemple, s'il est attendu le code binaire "1010" pour un premier motif P1 de la troisième matrice M3 et que le processeur 16 détermine le code binaire "0101", cela signifie que l'image présente une inversion entre le haut et le bas.

A partir du deuxième motif P2 de chaque groupe G, le processeur 16 peut déterminer à quelle position de la matrice 12 correspondent les signaux de test. A titre d'exemple, à partir de la détermination de l'identifiant d'un groupe G de la deuxième matrice M2, le processeur 16 peut déterminer à quelle position de l'image il se situe selon les colonnes, et à partir de la détermination de l'identifiant d'un groupe G de la troisième matrice M3, le processeur 16 peut déterminer à quelle position de l'image il se situe selon les rangées.

Selon un mode de réalisation, dans une première configuration, le processeur 16 peut commander la lecture de la totalité d'une nouvelle image ou, dans une deuxième configuration, peut commander seulement la lecture d'une partie d'une nouvelle image. La deuxième configuration peut être avantageuse, par exemple lorsqu'une zone d'intérêt est déterminée par le processeur 16 sur une nouvelle image acquise, de façon à rafraîchir la zone d'intérêt à une fréquence plus élevée, ou par exemple lorsque la taille de la matrice M1 est supérieure à la taille de l'image souhaitée, de façon à pouvoir ne sélectionner qu'une sous-partie de l'image pour obtenir la taille souhaitée. En outre, lorsque le capteur d'image est disposé dans un véhicule, la position de cette sous-partie peut être dépendante de l'orientation exacte du capteur dans le véhicule et peut être déterminée pour chaque véhicule afin de compenser les erreurs d'alignement mécanique. Selon la première configuration, la lecture d'une nouvelle image acquise peut comprendre la lecture successive de toutes les rangées de pixels de la matrice 12, c'est-à-dire en lisant successivement les rangées RT₁ à RT_{R} des deuxième et troisième matrices M2 et M3 puis les rangées R₁ à R_{M} des première et troisième matrices M1 et M3. Selon la deuxième configuration, la lecture d'une partie de l'image acquise peut comprendre la lecture successive de toutes les rangées RT₁ à RT_{R} des deuxième et troisième matrices M2 et M3, puis un saut jusqu'à la première rangée des première et troisième matrices M1 et M3 de la zone d'intérêt, puis la lecture successive des rangées de pixels des première et troisième matrices M1 et M3 à partir de la première rangée des première et troisième matrices M1 et M3 de la zone d'intérêt jusqu'à la dernière rangée de pixels des première et troisième matrices M1 et M3 de la zone d'intérêt. En outre, pour la deuxième matrice M2, la totalité des signaux de sortie de toutes les colonnes C₁ à C_{N} peuvent être lus, tandis que, pour la zone d'intérêt, seuls les signaux de sortie des colonnes de la zone d'intérêt de la première matrice M1 peuvent être lus avec les colonnes CT₁ à CT_{Q} de la troisième matrice M3. A partir du deuxième motif P2 de chaque groupe G, le processeur 16 peut déterminer si c'est bien la zone d'intérêt de l'image qui est lue.

De façon avantageuse, la taille SIZE_G de chaque groupe est inférieure ou égale à la moitié de la taille minimale de la zone d'intérêt pouvant être lue. De ce fait, quelle que soit la position de la première rangée de la zone d'intérêt, la lecture de la zone d'intérêt permet la lecture de plus de SIZE_G paires successives de pixels de test de la troisième matrice M3. Le processeur 16 est configuré pour déterminer au moins un premier motif P1 parmi les paires de pixels lues et de reconstruire au moins un deuxième motif P2 complet à partir duquel la position de la zone d'intérêt peut être déterminée.

Selon un mode de réalisation, si une erreur est déterminée par le processeur 16 lors de l'attribution de la valeur "0" ou "1" au signal de test, le processeur 16 détermine que la rangée et/ou la colonne à laquelle appartient le pixel de test ayant fourni ce signal de test est invalide. En outre, si une erreur est déterminée par le processeur 16 lors de la vérification du fait que les valeurs des pixels de test de chaque paire de pixels de test doivent être opposées, le processeur 16 détermine que la rangée et/ou la colonne à laquelle appartient la paire de pixels de test ayant fourni ces signaux de test est invalide. De façon avantageuse, si une rangée et/ou colonne est considérée comme invalide, le processeur 16 peut néanmoins déterminer l'orientation de l'image et/ou à quelle position de la matrice 12 il se situe. Selon un mode de réalisation, si deux rangées ou plus, ou deux colonnes ou plus de l'image sont considérées comme invalides, le processeur 16 peut déterminer qu'il n'est pas capable de garantir que l'orientation et la position de l'image sont correctes et donc déterminer que la totalité de l'image doit être considérée corrompue.

Selon un mode de réalisation, si le processeur 16 détermine à partir du premier motif P1 que l'orientation de l'image est incorrecte et/ou à partir du deuxième motif P2 que la position dans l'image n'est pas celle attendue, le processeur 16 peut déterminer que la totalité de l'image doit être considérée corrompue.

Le procédé se poursuit à l'étape 53A.

A l'étape 53A, le processeur 16 détermine, suite aux vérifications réalisées à l'étape 52A, si des conditions d'alerte sont remplies et émet un message d'alerte lorsque les conditions d'alerte sont remplies. Selon un mode de réalisation, un message d'alerte peut être émis par le processeur 16 s'il est détecté que l'image n'est pas orientée convenablement, par exemple si une inversion droite-gauche et/ou haut-bas est détectée. Selon un mode de réalisation, un message d'alerte peut être émis s'il est détecté que le circuit de lecture et de conversion analogique-numérique 14 ne fonctionne pas correctement pour une colonne. Selon un mode de réalisation, un message d'alerte peut être émis s'il est détecté que la position de la zone d'intérêt lue n'est pas correcte. Le procédé se poursuit à l'étape 54. Selon un mode de réalisation, un message d'alerte peut être émis par le processeur 16 s'il est détecté qu'un signal de contrôle de ligne n'est pas correct, notamment lorsqu'un pixel de test de la matrice M3 est invalide.

A l'étape 54, la prochaine rangée de la matrice 12 à sélectionner est déterminée. Le procédé retourne à l'étape 50.

A l'étape 52B, le processeur effectue un traitement sur les signaux vidéo. Le traitement peut être effectué après l'acquisition complète de l'image ou de la zone d'intérêt et/ou au fur et à mesure de l'acquisition des rangées successives de l'image ou de la zone d'intérêt. Le traitement peut dépendre notamment de l'application dans lequel le capteur d'images est utilisé. Selon un mode de réalisation, le processeur 16 peut réaliser des traitements visant à améliorer la qualité de l'image, par exemple la netteté de l'image.

Le procédé se poursuit à l'étape 53B, le processeur 16 transmet des signaux vers l'extérieur du capteur d'images. A titre d'exemple, le processeur 16 transmet les signaux vidéo après les traitements d'amélioration de la qualité des images.

Le procédé se poursuit à l'étape 54.

De façon avantageuse, l'étape 52A peut être mise en oeuvre directement par le processeur 16 du capteur d'images 10. Ceci permet d'accélérer le traitement de l'image.

A titre de variante, les étapes 52A et 53A peuvent être mises en oeuvre par un autre processeur que le processeur 16 à partir des signaux de test fournis par le processeur 16.

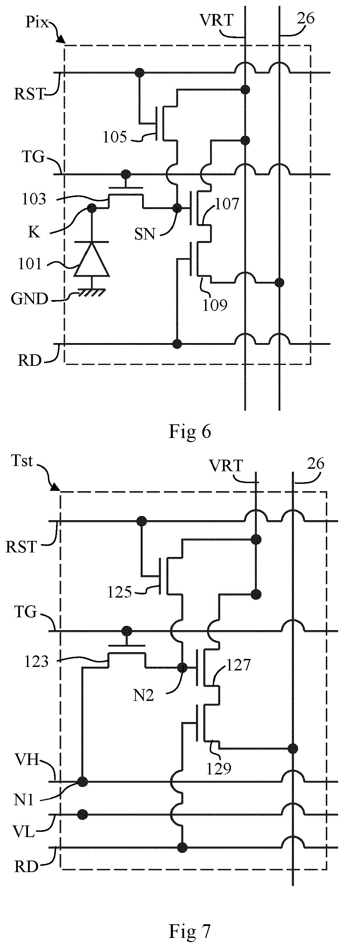

La figure 6 représente un mode de réalisation d'un pixel d'image Pix.

Chaque pixel d'image Pix comprend une photodiode 101, un noeud d'accumulation K formé par la cathode de la photodiode, un noeud capacitif de lecture SN, un transistor MOS 103 ou transistor de transfert reliant le noeud d'accumulation K au noeud de lecture SN, un transistor MOS 105 ou transistor de réinitialisation reliant le noeud de lecture SN à un noeud d'application d'un potentiel haut de réinitialisation VRT, et un circuit de lecture reliant le noeud de lecture SN à une piste de sortie 26. Dans cet exemple, dans chaque pixel Pix, le circuit de lecture du pixel comprend un transistor MOS 107 ou transistor d'amplification, monté en source suiveuse, dont la grille est connectée au noeud de lecture SN du pixel, et un transistor MOS 109 ou transistor de sélection, reliant la source du transistor 107 à la piste de sortie 26 du pixel. Dans l'exemple représenté, les transistors 103, 105, 107 et 109 sont des transistors à canal N, et le drain du transistor 107 est relié à un noeud d'application du potentiel VRT. De plus, dans cet exemple, l'anode de la photodiode 101 est reliée à un noeud d'application d'un potentiel bas de référence GND, inférieur au potentiel VRT, par exemple la masse.

De plus, dans l'exemple de la figure 6, à chaque rangée Rᵢ de pixels Pix, sont associés : un noeud d'application d'un signal de commande TG des transistors de transfert 103 des pixels de la rangée ; un noeud d'application d'un signal de commande RST des transistors de réinitialisation 105 des pixels de la ligne ; et un noeud d'application d'un signal de commande RD des transistors de sélection 109 des pixels de la ligne. Les noeuds RD, les noeuds TG, et les noeuds RST des pixels Pix de la rangée Rᵢ sont couplés à des pistes de sélection 24, non représentées, de la rangée Rᵢ.

La figure 7 représente un mode de réalisation d'un pixel de test Tst. Chaque pixel de test Tst comporte un transistor MOS 123 ou transistor de transfert, reliant un noeud N1 du pixel de test à un noeud de lecture N2, un transistor MOS 125 ou transistor de réinitialisation, reliant le noeud de lecture N2 du pixel de test à un noeud d'application d'un potentiel de réinitialisation, le potentiel VRT dans cet exemple, et un circuit de lecture reliant le noeud de lecture N2 à la piste de sortie 26 associée au pixel de test Tst. Le noeud N1 est relié, de préférence connecté, à une piste VH de fourniture d'un potentiel haut ou à une piste VL de fourniture d'un potentiel bas. Dans l'exemple de la figure 7, le noeud N1 est connecté à la piste VH de fourniture du potentiel haut. Pour les pixels de test Tst de la deuxième matrice M2, les pistes VH et VL s'étendent selon les rangées RTₖ de la deuxième matrice M2. Pour les pixels de test Tst de la troisième matrice M3, les pistes VH et VL s'étendent selon les colonnes CTₚ de la troisième matrice M3.

Dans l'exemple représenté en figure 7, chaque pixel de test Tst est connecté, via son circuit de lecture, à une et une seule piste de sortie 26 du capteur, et les différents pixels de test Tst sont connectés, via leurs circuits de lecture, à des pistes de sortie 26 distinctes. Dans cet exemple, dans chaque pixel de test Tst, le circuit de lecture du pixel de test comprend un transistor MOS 127 ou transistor d'amplification, monté en source suiveuse, dont la grille est connectée au noeud de lecture N2 du pixel de test, et un transistor MOS 129 ou transistor de sélection, reliant la source du transistor 127 à la piste de sortie 26 associée au pixel de test Tst. Dans l'exemple représenté, les transistors 123, 125, 127 et 129 sont des transistors à canal N, et le drain du transistor 127 est relié à un noeud d'application du potentiel VRT. Dans cet exemple, chaque pixel de test Tst diffère d'un pixel d'image Pix du capteur uniquement en ce que, dans le pixel de test, la photodiode 101 n'est pas présente. Dans cet exemple, les noeuds d'anode et de cathode de la photodiode 101 sont confondus en le noeud N1.

Selon un mode de réalisation, lorsque la valeur "1" doit être "stockée" dans le pixel de test Tst, le noeud N1 du pixel de test Tst est relié, de préférence connecté, à la piste VL de fourniture du potentiel bas et lorsque la valeur "0" doit être "stockée" dans le pixel de test Tst, le noeud N1 du pixel de test Tst est relié, de préférence connecté, à la piste VH de fourniture du potentiel haut. Ceci permet, de façon avantageuse, d'être cohérent avec le pixel d'image Pix à photodiode, pour lequel la captation de lumière génère une conduction en inverse de la photodiode et fait descendre le potentiel au noeud d'accumulation K.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, dans les modes de réalisation décrits précédemment, la valeur "0" ou "1" stockée dans chaque pixel de test Tst est constante. A titre de variante, chaque pixel de test Tst peut être relié à la piste VH par un premier interrupteur commandable et être relié à la piste VL par un deuxième interrupteur commandable, le deuxième interrupteur étant ouvert lorsque le premier interrupteur est fermé et inversement. Ceci permet de changer la valeur stockée dans le pixel de test Tst. A titre d'exemple, la valeur stockée dans au moins certains pixels de test Tst est inversée à chaque acquisition d'une nouvelle image.

Enfin, la mise en oeuvre pratique des modes de réalisation et variantes décrits est à la portée de la personne du métier à partir des indications fonctionnelles données ci-dessus.

## Revendications

1. Dispositif électronique (10), comprenant:
un premier réseau (M1) de pixels d'image (Pix) ayant des entrées couplées à des premières pistes de sélection (24) et des sorties couplées à des premières pistes de sortie (26) ;
au moins un deuxième réseau (M2) de pixels de test (Tst) ayant des entrées couplées à des deuxièmes pistes de sélection (24) et des sorties couplées aux premières pistes de sortie ;
au moins un troisième réseau (M3) de pixels de test (Tst) ayant des entrées couplées aux premières pistes de sélection et des sorties couplées à des deuxièmes pistes de sortie ; et
un processeur (16),
dans lequel chaque pixel de test des deuxième et troisième réseaux est configuré pour fournir au processeur un signal de sortie à l'une ou l'autre de deux valeurs attendues en l'absence d'un défaut dans l'une des premières pistes de sélection ou dans l'une des premières pistes de sortie, et dans lequel le processeur est configuré pour déterminer un défaut lors de la fourniture du signal de sortie à une autre valeur que l'une ou l'autre des deux valeurs attendues par un ou plusieurs des pixels de test,
dans lequel les pixels d'image (Pix) du premier réseau (M1) sont configurés pour fournir des signaux vidéo lors de l'acquisition d'une image, dans lequel le deuxième réseau (M2) et/ou le troisième réseau (M3) comprend au moins un ensemble (E) de pixels de test (Tst) comprenant un premier alignement de pixels de test configurés pour fournir des signaux de sortie, chacun à l'une ou l'autre de deux valeurs attendues en l'absence d'un défaut, dans lequel le processeur (16) est configuré pour recevoir successivement une succession des signaux de sortie du premier alignement lus avec des signaux vidéo de pixels d'image (Pix) du premier réseau (M1), pour déterminer à partir de la lecture successive de n'importe quelle partie, comprenant au moins un nombre donné des signaux de sortie du premier alignement lus successivement, si l'orientation de l'image acquise est correcte, et/ou à quelle position du premier réseau (M1) de pixels d'image (Pix) correspondent les signaux vidéo lus avec les signaux de sortie de ladite partie,
dans lequel les pixels de test du premier alignement sont répartis en groupes (G) successifs de pixels de test, chaque groupe comprenant un premier groupement (P1) de pixels de test, et un deuxième groupement (P2) de pixels de test, les pixels de test du premier groupement de chaque groupe étant configurés pour fournir un premier motif (P1), et au moins une partie des pixels de test du deuxième groupement de chaque groupe étant configurés pour fournir un deuxième motif (P2) identifiant ledit groupe

2. Dispositif électronique selon la revendication 1, dans lequel chaque pixel d'image (Pix) comprend au moins une photodiode (101) et est configuré pour générer une tension de sortie à sa sortie qui dépend de la lumière atteignant ladite au moins une photodiode, et dans lequel chaque pixel de test (Tst) comprend une entrée (N1) recevant l'une ou l'autre de deux tensions de référence (VH, VL) de sorte que le pixel de test fournisse le signal de sortie à l'une ou l'autre des deux valeurs attendues en l'absence du défaut.

3. Dispositif électronique selon la revendication 1 ou 2, comprenant un circuit de commande (28) des premières et deuxièmes pistes de sélection (24), un circuit de traitement analogique et de conversion analogique-numérique (14) couplé aux premières et deuxièmes pistes de sortie (26), et un support sur lequel sont disposés les premier, deuxième, et troisième réseaux, le circuit de commande (28) et le circuit de traitement analogique et de conversion analogique-numérique (14), le deuxième réseau (M2) étant situé sur le support du côté du premier réseau (M1) opposé au circuit de traitement analogique et de conversion analogique-numérique (14) et le troisième réseau (M3) étant situé sur le support du côté du premier réseau (M1) opposé au circuit de commande (28).

4. Dispositif électronique selon l'une quelconque des revendications 1 à 3, dans lequel le nombre donné de signaux de sortie lus successivement correspond à la longueur de la plus petite région d'intérêt de l'image sur laquelle le processeur (16) est configuré pour appliquer un traitement.

5. Dispositif électronique selon l'une quelconque des revendications 1 à 4, dans lequel le processeur (16) est configuré pour déterminer si l'orientation de l'image acquise est correcte, et/ou à quelle position du premier réseau (M1) de pixels d'image (Pix) correspondent les signaux vidéo lus avec les signaux de sortie de ladite partie même si l'un des signaux de sortie de ladite partie n'est pas à l'une desdites deux valeurs.

6. Dispositif électronique selon l'une quelconque des revendications 1 à 5, dans lequel le processeur (16) est configuré pour déterminer, pour chaque signal de sortie, si le signal de sortie est à l'une ou l'autre des deux valeurs attendues, et, dans le cas où le signal de sortie n'est pas à l'une ou l'autre des deux valeurs attendues, indiquer que les pixels d'image, couplés (Pix) à la même piste de sélection (24) et/ou à la même première piste de sortie (26) que le pixel de test (Tst) ayant fourni le signal de sortie, sont invalides.

7. Dispositif électronique selon l'une quelconque des revendications 1 à 6, dans lequel les pixels de test (Tst) de chaque premier groupement (P1) sont configurés pour fournir un premier motif de signaux de sortie alternant entre les première et deuxième valeurs.

8. Dispositif électronique selon l'une quelconque des revendications 1 à 7, dans lequel les pixels de test (Tst) du deuxième groupement (P2) de chaque groupe sont configurés pour fournir un deuxième motif des signaux de sortie codant un identifiant unique dudit groupe.

9. Dispositif électronique selon la revendication 8, dans lequel les pixels de test (Tst) de chaque deuxième groupement (P2) sont répartis en couples de pixels de test configurés pour fournir les mêmes signaux de sortie.

10. Dispositif électronique selon l'une quelconque des revendications 1 à 9, dans lequel chaque ensemble (E) de pixels de test (Tst) comprend un deuxième alignement de pixels de test adjacent au premier alignement de pixels de test, les pixels des premier et deuxième alignements étant appariés, et les pixels de test de chaque paire de pixels de test étant configurés pour fournir des signaux de sortie différents parmi les deux valeurs.

11. Dispositif électronique selon la revendication 10, dans lequel le processeur (16) est configuré pour déterminer, pour chaque paire de pixels de test (Tst), si les signaux de sortie fournis par les pixels de test de la paire sont différents, et, dans le cas où les signaux de sortie ne sont pas différents, indiquer que les pixels d'image (Pix), couplés à la même piste de sélection (24) et/ou à la même première piste de sortie (26) que les pixels de test (Tst) de la paire, sont invalides.

12. Dispositif électronique selon l'une quelconque des revendications 1 à 11, dans lequel les pixels d'image (Pix) du premier réseau (M1) sont agencés en rangées et en colonnes, le dispositif étant configuré pour fonctionner dans une première configuration dans laquelle toutes les rangées du premier réseau sont sélectionnées successivement et dans une deuxième configuration dans laquelle seule une partie des rangées du premier réseau sont lues successivement, dans lequel le nombre de pixels de test de chaque groupe (E) du premier alignement est inférieur au nombre de rangées de ladite partie.

13. Dispositif électronique selon l'une quelconque des revendications 1 à 12, dans lequel chaque pixel de test (Tst) comprend un premier transistor MOS (123) ayant un drain couplé à un noeud d'entrée (N1), une source couplée à un deuxième noeud (N2), et une grille couplée à l'une des pistes de sélection (24), un deuxième transistor MOS (125) ayant un drain couplé à une tension de référence supérieure (VRT), une source couplée au deuxième noeud, et une grille couplée à une piste de signal de réinitialisation (24), un premier suiveur (127) couplé au deuxième noeud et configuré pour répliquer une tension sur le deuxième noeud vers une sortie du premier suiveur, et un troisième transistor (129) ayant un drain couplé à la sortie du premier suiveur, une source couplée à une sortie de lecture, et une grille couplée à une piste de signal de lecture, et dans lequel chaque pixel d'image (Pix) comprend une photodiode (101), un quatrième transistor MOS (103) ayant un drain couplé à l'anode ou la cathode de la photodiode, une source couplée à un troisième noeud (SN), et une grille couplée à l'une des pistes de sélection (24), un cinquième transistor MOS (105) ayant un drain couplé à la tension de référence supérieure (VRT), une source couplée au troisième noeud, et une grille couplée à une piste de signal de réinitialisation (24), un deuxième suiveur (107) couplé au troisième noeud et configuré pour répliquer une tension sur le troisième noeud vers une sortie du deuxième suiveur, et un sixième transistor (109) ayant un drain couplé à la sortie du deuxième suiveur, une source couplée à une sortie de lecture, et une grille couplée à une piste de signal de lecture.

14. Procédé de conception du dispositif électronique (10), selon l'une quelconque des revendications 1 à 13, comprenant la détermination de chaque pixel de test (Tst) fournissant un signal de sortie à l'une des deux valeurs attendues en l'absence d'un défaut et chaque pixel de test (Tst) fournissant un signal de sortie à l'autre des deux valeurs attendues en l'absence d'un défaut, de façon que les pixels de test du deuxième réseau (M2) et/ou du troisième réseau (M3) forment au moins un ensemble (E) de pixels de test (Tst) comprenant un premier alignement de pixels de test, de façon à pouvoir déterminer, à partir de la lecture successive de n'importe quelle partie, comprenant au moins un nombre donné des signaux de sortie du premier alignement lus successivement, si l'orientation de l'image acquise est correcte, et/ou à quelle position du premier réseau (M1) de pixels d'image (Pix) correspondent des signaux vidéo lus avec les signaux de sortie de ladite partie.

## Patentansprüche

1. Elektronische Vorrichtung (10), wobei die Vorrichtung Folgendes aufweist:
eine erste Anordnung (M1) von Bildpixeln (Pix), deren Eingänge mit ersten Auswahlbahnen (24) und deren Ausgänge mit ersten Ausgangsbahnen (26) verbunden sind;
mindestens eine zweite Anordnung (M2) von Testpixeln (Tst), deren Eingänge mit zweiten Auswahlbahnen (24) und deren Ausgänge mit den ersten Ausgangsbahnen verbunden sind;
mindestens eine dritte Anordnung (M3) von Testpixeln (Tst), deren Eingänge mit den ersten Auswahlbahnen und deren Ausgänge mit zweiten Ausgangsbahnen verbunden sind; und
einen Prozessor (16),
wobei jedes Testpixel der zweiten und dritten Anordnungen so konfiguriert ist, dass es dem Prozessor ein Ausgangssignal mit dem einen oder dem anderen von zwei erwarteten Werten liefert, wenn kein Fehler in einer der ersten Auswahlbahnen oder in einer der ersten Ausgangsbahnen vorliegt, und wobei der Prozessor so konfiguriert ist, dass er einen Fehler feststellt, wenn das Ausgangssignal mit einem anderen Wert als dem einen oder dem anderen der beiden erwarteten Werte von einem oder mehreren der Testpixel geliefert wird,
wobei die Bildpixel (Pix) der ersten Anordnung (M1) so konfiguriert sind, dass sie bei der Erfassung eines Bildes Videosignale liefern, wobei die zweite Anordnung (M2) und/oder die dritte Anordnung (M3) mindestens eine Anordnung (E) von Testpixeln (Tst) aufweist, die eine erste Ausrichtung von Testpixeln aufweist, die so konfiguriert ist, dass sie bei Abwesenheit eines Defekts Ausgangssignale jeweils bei dem einen oder dem anderen von zwei erwarteten Werten liefert, wobei der Prozessor (16) so konfiguriert ist, dass er nacheinander eine Folge von Ausgangssignalen der ersten Ausrichtung empfängt, die mit Videosignalen von Bildpixeln (Pix) der ersten Anordnung (M1) gelesen wurden, um anhand der aufeinanderfolgenden Lesungen eines beliebigen Abschnitts, der mindestens eine gegebene Anzahl der nacheinander gelesenen Ausgangssignale der ersten Ausrichtung aufweist, zu bestimmen, ob die Ausrichtung des erfassten Bildes korrekt ist und/oder welcher Position der ersten Anordnung (M1) von Bildpixeln (Pix) die mit den Ausgangssignalen des genannten Abschnitts gelesenen Videosignale entsprechen,
wobei die Testpixel der ersten Ausrichtung in aufeinanderfolgenden Gruppen (G) von Testpixeln verteilt sind, wobei jede Gruppe einen ersten Satz (P1) von Testpixeln und einen zweiten Satz (P2) von Testpixeln aufweist, wobei die Testpixel des ersten Satzes jeder Gruppe so konfiguriert sind, dass sie ein erstes Muster (P1) liefern, und mindestens ein Teil der Testpixel des zweiten Satzes jeder Gruppe so konfiguriert ist, dass sie ein zweites Muster (P2) liefert, das die Gruppe identifiziert.

2. Elektronische Vorrichtung nach Anspruch 1, wobei jedes Bildpixel (Pix) mindestens eine Fotodiode (101) aufweist und so konfiguriert ist, dass es an seinem Ausgang eine Ausgangsspannung erzeugt, die von dem Licht abhängt, das die mindestens eine Fotodiode erreicht, und wobei jedes Testpixel (Tst) einen Eingang (N1) aufweist, der die eine oder die andere von zwei Referenzspannungen (VH, VL) empfängt, so dass das Testpixel bei Abwesenheit des Defekts das Ausgangssignal bei dem einen oder dem anderen der beiden erwarteten Werte liefert.

3. Elektronische Vorrichtung nach Anspruch 1 oder 2, aufweisend eine Schaltung (28) zur Steuerung der ersten und zweiten Auswahlbahnen (24), eine mit der ersten und zweiten Ausgangsbahn (26) gekoppelten Analogverarbeitungs- und Analog-Digital-Wandlerschaltung (14) und einen Träger mit der ersten, zweiten und dritten Anordnung, der Steuerschaltung (28), und der Analogverarbeitungs- und Analog-Digital-Umwandlungsschaltung (14) darauf angeordnet, wobei die zweite Anordnung (M2) auf dem Träger auf der Seite der ersten Anordnung (M1) gegenüber der Analogverarbeitungs- und Analog-Digital-Umwandlungsschaltung (14) angeordnet ist und die dritte Anordnung (M3) auf dem Träger auf der Seite der ersten Anordnung (M1) gegenüber der Steuerschaltung (28) angeordnet ist.

4. Elektronische Vorrichtung nach einem der Ansprüche 1 bis 3, wobei die vorgegebene Anzahl der nacheinander ausgelesenen Ausgangssignale der Länge des kleinsten Bereichs von Interesse des Bildes entspricht, für den der Prozessor (16) konfiguriert ist um ihn einer Verarbeitung zu unterziehen.

5. Elektronische Vorrichtung nach einem der Ansprüche 1 bis 4, wobei der Prozessor (16) konfiguriert ist zum Bestimmen, ob die Ausrichtung des erfassten Bildes korrekt ist und/oder welche Position der ersten Anordnung (M1) von Bildpixeln (Pix) den Videosignalen entsprechen, die mit den Ausgangssignalen des Abschnitts gelesenen wurden, selbst wenn eines der Ausgangssignale des Abschnitts nicht bei einem der beiden Werte liegt.

6. Elektronische Vorrichtung nach einem der Ansprüche 1 bis 5, wobei der Prozessor (16) konfiguriert ist zum Bestimmen, für jedes Ausgangssignal, ob das Ausgangssignal auf dem einen oder dem anderen der beiden erwarteten Werte liegt, und in dem Fall, in dem das Ausgangssignal nicht auf dem einen oder dem anderen der beiden erwarteten Werte liegt, zum Anzeigen, dass die Bildpixel (Pix), die mit der gleichen Auswahlbahn (24) und/oder der gleichen ersten Ausgangsbahn (26) wie das Testpixel (Tst), das das Ausgangssignal geliefert hat, gekoppelt sind, ungültig sind.

7. Elektronische Vorrichtung nach einem der Ansprüche 1 bis 6, wobei die Testpixel (Tst) jedes ersten Satzes (P1) so konfiguriert sind, dass sie ein erstes Muster von Ausgangssignalen liefern, die zwischen dem ersten und dem zweiten Wert wechseln.

8. Elektronische Vorrichtung nach einem der Ansprüche 1 bis 7, wobei die Testpixel (Tst) des zweiten Satzes (P2) jeder Gruppe so konfiguriert sind, dass sie ein zweites Muster von Ausgangssignalen liefern, die einen eindeutigen Identifikator der Gruppe codieren.

9. Elektronische Vorrichtung nach Anspruch 8, wobei die Testpixel (Tst) jedes zweiten Satzes (P2) in Paare von Testpixeln verteilt sind, die so konfiguriert sind, dass sie die gleichen Ausgangssignale liefern.

10. Elektronische Vorrichtung nach einem der Ansprüche 1 bis 9, wobei jede Anordnung (E) von Testpixeln (Tst) eine zweite Ausrichtung von Testpixeln neben der ersten Ausrichtung von Testpixeln aufweist, wobei die Pixel der ersten und zweiten Ausrichtung gepaart sind und die Testpixel oder jedes Paar von Testpixeln so konfiguriert sind, dass sie unterschiedliche Ausgangssignale zwischen den beiden Werten liefern.

11. Elektronische Vorrichtung nach Anspruch 10, wobei der Prozessor (16) so konfiguriert ist, dass er für jedes Paar von Testpixeln (Tst) bestimmt, ob die von den Testpixeln in dem Paar gelieferten Ausgangssignale unterschiedlich sind, und in dem Fall, in dem die Ausgangssignale nicht unterschiedlich sind, anzeigt, dass die Bildpixel (Pix), die mit der gleichen Auswahlbahn (24) und/oder mit der gleichen ersten Ausgangsbahn (26) wie die Testpixel (Tst) in dem Paar gekoppelt sind, ungültig sind.

12. Elektronische Vorrichtung nach einem der Ansprüche 1 bis 11, wobei die Bildpixel (Pix) der ersten Anordnung (M1) in Zeilen und in Spalten angeordnet sind, wobei die Vorrichtung so konfiguriert ist, dass sie in einer ersten Konfiguration arbeitet, in der alle Zeilen der ersten Anordnung nacheinander ausgewählt werden, und in einer zweiten Konfiguration, in der nur ein Teil der Zeilen der ersten Anordnung nacheinander gelesen wird, wobei die Anzahl der Testpixel jeder Gruppe (E) der ersten Ausrichtung kleiner ist als die Anzahl der Zeilen des Teils.

13. Elektronische Vorrichtung nach einem der Ansprüche 1 bis 12, wobei jedes Testpixel (Tst) Folgendes aufweist: einen ersten MOS-Transistor (123) mit einem an einen Eingangsknoten (N1) gekoppelten Drain, einer an einen zweiten Knoten (N2) gekoppelten Source und einem an eine der Auswahlbahnen (24) gekoppelten Gate, einen zweiten MOS-Transistor (125) mit einem an eine hohe Referenzspannung (VRT) gekoppelten Drain, einer an den zweiten Knoten gekoppelten Source und ein Gate, das mit einer Rücksetzsignalbahn (24) gekoppelt ist, einen ersten Spannungsfolger (127), der mit dem zweiten Knoten gekoppelt ist und so konfiguriert ist, dass er eine Spannung am zweiten Knoten zu einem Ausgang des ersten Spannungsfolgers repliziert, und einen dritten Transistor (129) mit einem Drain, der mit dem Ausgang des zweiten Spannungsfolgers gekoppelt ist, einer Source, die mit einem Leseausgang gekoppelt ist, und einem Gate, das mit einer Auslesesignalbahn gekoppelt ist, und wobei jedes Bildpixel (Pix) Folgendes aufweist: eine Fotodiode (101), einen vierten MOS-Transistor (103) mit einem mit der Anode oder der Kathode der Fotodiode gekoppelten Drain, einer mit einem dritten Knoten (SN) gekoppelten Source und einem mit einer der Auswahlbahnen (24) gekoppelten Gate, einen fünften MOS-Transistor (105) mit einem mit der hohen Referenzspannung (VRT) gekoppelten Drain, einer mit dem dritten Knoten gekoppelten Source und einem Gate, das mit einer Rücksetzsignalbahn (24) gekoppelt ist, einen zweiten Spannungsfolger (107), der mit dem dritten Knoten gekoppelt ist und so konfiguriert ist, dass er eine Spannung am dritten Knoten zu einem Ausgang des zweiten Spannungsfolgers repliziert, und einen sechsten Transistor (109) mit einem Drain, der mit dem Ausgang des zweiten Spannungsfolgers gekoppelt ist, einer Source, die mit einem Leseausgang gekoppelt ist, und einem Gate, das mit einer Auslesesignalbahn gekoppelt ist.

14. Verfahren zum Entwerfen der elektronischen Vorrichtung (10) nach einem der Ansprüche 1 bis 13, das Folgendes aufweist: das Bestimmen jedes Testpixels (Tst), welches bei Abwesenheit eines Defekts ein Ausgangssignal mit einem der beiden erwarteten Werte liefert und jedes Testpixels (Tst), welches bei Abwesenheit eines Defekts ein Ausgangssignal mit dem anderen der beiden erwarteten Werte liefert, so dass die Testpixel der zweiten Anordnung (M2) und/oder der dritten Anordnung (M3) mindestens eine Anordnung (E) von Testpixeln (Tst) bilden, die eine erste Ausrichtung von Testpixeln aufweist, um aus dem aufeinanderfolgenden Lesen eines beliebigen Abschnitts, der mindestens eine gegebene Anzahl von aufeinanderfolgend gelesenen Ausgangssignalen der ersten Ausrichtung aufweist, bestimmen zu können, ob die Ausrichtung des erfassten Bildes korrekt ist und/oder welcher Position der ersten Anordnung (M1) von Bildpixeln (Pix) die mit den Ausgangssignalen des genannten Abschnitts gelesenen Videosignale entsprechen.

## Claims

1. Electronic device (10), comprising:
a first array (M1) of image pixels (Pix) having inputs coupled to first selection tracks (24) and outputs coupled to first output tracks (26);
at least one second array (M2) of test pixels (Tst) having inputs coupled to second selection tracks (24) and outputs coupled to the first output tracks;
at least one third array (M3) of test pixels (Tst) having inputs coupled to the first selection tracks and outputs coupled to second output tracks; and
a processor (16),
wherein each test pixel of the second and third arrays is configured to supply the processor with an output signal at one or the other of two expected values in the absence of a defect in one of the first selection tracks or in one of the first output tracks, and wherein the processor is configured to determine a defect on delivery of the output signal at another value than one or the other of the two expected values, by one or a plurality of the test pixels,
wherein the image pixels (Pix) of the first array (M1) are configured to deliver video signals on acquisition of an image, wherein the second array (M2) and/or the third array (M3) comprises at least one assembly (E) of test pixels (Tst) comprising a first alignment of test pixels configured to deliver output signals, each at one or the other of two expected values in the absence of a defect, wherein the processor (16) is configured to successively receive a succession of output signals of the first alignment read with video signals of image pixels (Pix) of the first array (M1), to determine, from the successive reading of any portion, comprising at least a given number of the successively-read output signals of the first alignment, whether the orientation of the acquired image is correct, and/or to which position of the first array (M1) of image pixels (Pix) correspond the video signals read with the output signals of said portion,
wherein the test pixels of the first alignment are distributed in successive groups (G) of test pixels, each group comprising a first set (P1) of test pixels, and a second set (P2) of test pixels, the test pixels of the first set of each group being configured to deliver a first pattern (P1), and at least a portion of the test pixels of the second set of each group being configured to deliver a second pattern (P2) identifying said group.

2. Electronic device according to claim 1, wherein each image pixel (Pix) comprises at least one photodiode (101) and is configured to generate an output voltage at its output which depends on the light reaching said at least one photodiode, and wherein each test pixel (Tst) comprises an input (N1) receiving one or the other of two reference voltages (VH, VL) so that the test pixel delivers the output signal at one or the other of the two expected values in the absence of the defect.

3. Electronic device according to claim 1 or 2, comprising a circuit (28) for controlling the first and second selection tracks (24), an analog processing and analog-to-digital conversion circuit (14) coupled to the first and second output tracks (26), and a support having the first, second, and third arrays, the control circuit (28), and the analog processing and analog-to-digital conversion circuit (14) arranged thereon, the second array (M2) being located on the support on the side of the first array (M1) opposite to the analog processing and analog-to-digital conversion circuit (14) and the third array (M3) being located on the support on the side of the first array (M1) opposite to the control circuit (28).

4. Electronic device according to any of claims 1 to 3, wherein the given number of successively-read output signals corresponds to the length of the smallest region of interest of the image on which the processor (16) is configured to apply a processing.

5. Electronic device according to any of claims 1 to 4, wherein the processor (16) is configured to determine whether the orientation of the acquired image is correct, and/or to which position of the first array (M1) of image pixels (Pix) correspond the video signals read with the output signals of said portion even if one of the output signals of said portion is not at one of said two values.

6. Electronic device according to any of claims 1 to 5, wherein the processor (16) is configured to determine, for each output signal, whether the output signal is at one or the other of the two expected values and, in the case where the output signal is not at one or the other of the two expected values, indicate that the image pixels, coupled (Pix) to the same selection track (24) and/or to the same first output track (26) as the test pixel (Tst) having delivered the output signal, are invalid.

7. Electronic device according to any of claims 1 to 6, wherein the test pixels (Tst) of each first set (P1) are configured to deliver a first pattern of output signals alternating between the first and second values.

8. Electronic device according to any of claims 1 to 7, wherein the test pixels (Tst) of the second set (P2) of each group are configured to deliver a second pattern of output signals coding a unique identifier of said group.

9. Electronic device according to claim 8, wherein the test pixels (Tst) of each second set (P2) are distributed into pairs of test pixels configured to deliver the same output signals.

10. Electronic device according to any of claims 1 to 9, wherein each assembly (E) of test pixels (Tst) comprises a second alignment of test pixels adjacent to the first alignment of test pixels, the pixels of the first and second alignments being paired, and the test pixels or each pair of test pixels being configured to deliver different output signals among the two values.

11. Electronic device according to claim 10, wherein the processor (16) is configured to determine, for each pair of test pixels (Tst), whether the output signals delivered by the test pixels in the pair are different and, in the case where the output signals are not different, indicate that the image pixels (Pix), coupled to the same selection track (24) and/or to the same first output track (26) as the test pixels (Tst) in the pair, are invalid.

12. Electronic device according to any of claims 1 to 11, wherein the image pixels (Pix) of the first array (M1) are arranged in rows and in columns, the device being configured to operate in a first configuration where all the rows of the first array are successively selected and in a second configuration where only a portion of the rows of the first array are successively read, wherein the number of test pixels of each group (E) of the first alignment is smaller than the number of rows of said portion.

13. Electronic device according to any of claims 1 to 12, wherein each test pixel (Tst) comprises a first MOS transistor (123) having a drain coupled to an input node (N1), a source coupled to a second node (N2), and a gate coupled to one of the selection tracks (24), a second MOS transistor (125) having a drain coupled to a high reference voltage (VRT), a source coupled to the second node, and a gate coupled to a reset signal track (24), a first follower (127) coupled to the second node and configured to replicate a voltage on the second node towards an output of the first follower, and a third transistor (129) having a drain coupled to the output of the second follower, a source coupled to a read output, and a gate coupled to a readout signal track, and wherein each image pixel (Pix) comprises a photodiode (101), a fourth MOS transistor (103) having a drain coupled to the anode or the cathode of the photodiode, a source coupled to a third node (SN), and a gate coupled to one of the selection tracks (24), a fifth MOS transistor (105) having a drain coupled to the high reference voltage (VRT), a source coupled to the third node, and a gate coupled to a reset signal track (24), a second follower (107) coupled to the third node and configured to replicate a voltage on the third node towards an output of the second follower, and a sixth transistor (109) having a drain coupled to the output of the second follower, a source coupled to a read output, and a gate coupled to a readout signal track.

14. Method of designing the electronic device (10) according to any of claims 1 to 13, comprising the determination of each test pixel (Tst) delivering an output signal at one of the two expected values in the absence of a defect and each test pixel (Tst) delivering an output signal at the other one of the two expected values in the absence of a defect, so that the test pixels of the second array (M2) and/or of the third array (M3) form at least one assembly (E) of test pixels (Tst) comprising a first alignment of test pixels, to be able to determine, from the successive reading of any portion, comprising at least a given number of the successively-read output signals of the first alignment, whether the orientation of the acquired image is correct, and/or to which position of the first array (M1) of image pixels (Pix) correspond video signals read with the output signals of said portion.
